# EUROPÄISCHE PATENTSCHRIFT

(11) **EP 1 996 905 B1**
(45) Veröffentlichungstag und Bekanntmachung des Hinweises auf die Patenterteilung: **29.06.2011**
(21) Anmeldenummer: 07726732.6
(22) Anmeldetag: 09.03.2007
(51) Int. Cl.: G01F 23/296

(54) **VORRICHTUNG ZUR BESTIMMUNG UND/ODER ÜBERWACHUNG EINER PROZESSGRÖßE**
DEVICE FOR DETERMINING AND/OR MONITORING A PROCESS VARIABLE
DISPOSITIF DE DÉTERMINATION ET/OU DE SURVEILLANCE D'UN PARAMÈTRE DE TRAITEMENT

(30) Priorität: 21.03.2006 DE 102006013255
(43) Veröffentlichungstag der Anmeldung: 03.12.2008
(73) Patentinhaber: Endress+Hauser GmbH+Co. KG, 79689 Maulburg (DE)
(72) Erfinder: PFEIFFER, Helmut, 79585 Steinen (DE); KUHNY, Jutta, 79541 Lörrach (DE)
(74) Vertreter: Andres, Angelika Maria
(86) Internationale Anmeldenummer: PCT/EP2007/052209
(87) Internationale Veröffentlichungsnummer: WO 2007/107459

(56) Entgegenhaltungen:
- EP-A- 1 102 044
- EP-A- 1 134 038
- FR-A1- 2 553 189
- US-A- 3 718 897
- US-A1- 2006 058 706

## Beschreibung

Die Erfindung bezieht sich auf eine Vorrichtung zur Bestimmung und/oder Überwachung mindestens einer Prozessgröße eines Mediums in einem Behälter, mit mindestens einer mechanisch schwingfähigen Einheit, mit mindestens einer Antriebs-/Empfangseinheit, welche die mechanisch schwingfähige Einheit zu mechanischen Schwingungen anregt, und welche die mechanischen Schwingungen der mechanisch schwingfähigen Einheit empfängt, wobei die mechanisch schwingfähige Einheit mindestens eine Membran aufweist, wobei die Membran mit einem Gehäuse verbunden ist, wobei die Antriebs-/Empfangseinheit zwischen der Membran und einer Halterungseinheit angeordnet ist, und wobei die Halterungseinheit an dem Gehäuse befestigt ist. Bei der Prozessgröße handelt es sich beispielsweise um den Füllstand, die Dichte oder die Viskosität. Bei dem Medium handelt es sich beispielsweise um eine Flüssigkeit oder um ein Schüttgut.

Im Stand der Technik sind sog. Schwinggabeln und auch sog. Einstäbe bekannt, mit welchen beispielsweise der Füllstand eines Mediums messbar ist. Dafür wird die Schwinggabel oder der Einstab zu mechanischen Schwingungen angeregt. Die Kenngrößen der Schwingungen - Amplitude, Frequenz und die-Phase - hängen u.a. davon ob, ob die jeweilige sdiwingfähige Einheit - im Fall der Gabel sind es die beiden Gabelzinken - frei oder durch das Medium bedeckt schwingt. So nimmt beispielsweise bei Flüssigkeiten die Frequenz ab, wenn die Gabel oder der Einstab vom unbedeckten in den bedeckten Zustand übergeht. Daher ist es möglich, durch eine Auswertung der Frequenz auf den Füllstand zu schließen. Oft werden solche Messgeräte zur Grenzstandüberwadhung eingesetzt. Dabei wird unterschieden zwischen der Überwachung eines unteren (Min-Schutz) und eines oberen Grenzstands (Max-Schutz). Der jeweilige Grenzfüllstand hängt dabei von der Einbauhöhe und von der Dimensionierung des Messgerätes und besonders der Dimensionierung der schwingfähigen Einheit ab.

Die schwingfähige Einheit ist meist an einer Membran befestigt, hinter welcher sich die Antriebs-/Empfangseinheit befindet. Die Antriebs-/Empfangseinheit dient der Anregung der schwingfähigen Einheit zu Schwingungen und auch zum Empfangen der Schwingungen. Dabei handelt es sich in vielen Fällen um ein piezo-elektrisches Element, welches eine elektrische Wechselspannung in eine mechanische Schwingung bzw. umgekehrt mechanische Schwingungen in eine Wechselspannung überträgt. Die Auswertung der Wechselspannung erlaubt dann die Bestimmung der Kenngrößen der Schwingung. In einer Ausgestaltung, wie sie beispielsweise in der EP 1 134 038 A1 beschrieben ist, handelt es sich bei der Antriebs-/Empfangseinheit um einen Stapel von piezoelektrischen Elementen, welcher zwischen einer Halbkugel und einer Scheibe eingefasst ist. Dieser Stapel wird für eine optimale Kraftübertragung unter einer gewissen Vorspannung gegen die Membran gedrückt.

In der FR 2 553189 A1 ist beschrieben, wie ein Stapel piezoelektrischer Elemente unter einer Vorspannung mittels biegeelastischer Stützen gegen die Membran gedrückt wird. Die Stützen sind dabei gehäuseseitig nur mit der Membran verbunden. Die piezoelektrischen Elemente sind dabei zwischen der Membran und einer Halterungseinheit angeomdet, welche Halterungseinheit wiederum mit den biegeelastischen Stützen verbunden ist.

Eine Problematik für diesen Aufbau ergibt sich bei der Hodhtemperaturanwendung. Kommt es zu einem Temperatursprung, so kann es aufgrund der unterschiedlichen Ausdehnungskoeffizienten von der Membran, bzw. dem Gehäuse des Messgerätes und der Antriebs-/Empfangseinheit bzw. durch die Zeit für die gleichmäßige Ausbreitung der Temperatur im Messgerät dazu kommen, dass für eine gewisse Zeit der Kontakt zwischen Antriebs-/Empfangseinheit und Membran verloren geht. Dies bedeutet jedoch, dass die Messungen schlechter oder sogar unmöglich werden. Dies ist jedoch insbesondere für die sicherheitsrelevante Füllstandsüberwachung nicht tolerabel.

Die Aufgabe der Erfindung besteht daher darin, ein Messgerät anzugeben, bei welchem auch in der Hahtemperaturanwendung der Kontakt zwischen Antriebs-/Empfangseinheit und Membran sichergestellt ist.

Die Erfindung löst die Aufgabe dadurch, dass die Halterungseinheit derartig ausgestaltet und derartig an dem Gehäuse befestigt ist, dass eine Radialkraft (Frad), welche im Wesentlichen in Richtung der Normalen (N1) des Gehäuses wirkt, eine Kraftkomponente und/oder ein Drehmoment (Md) erzeugt, welche im Wesentlichen in Richtung einer Normalen (N2) der Halterungseinheit wirkt. Durch die Erfindung wird somit eine Radialkraft Frad, die aus dem Auftreten eines Temperaturgradienten resultiert, dazu benutzt, die Antriebs-/Empfangseinheit gegen die Membran zu drückern. Diese Radialkraft Frad wirkt meist nach außen. In einer Ausgestaltung handelt es sich bei dem Teil des Gehäuses, an welchem die Halterungseinheit befestigt ist, um eine rohrförmige Einheit. In diesem Fall handelt es sich um die Normale, welche senkrecht auf dem Roher steht. Die beiden Normalen N1 des Gehäuses bzw. des Rohres des Gehäuses und die Normale N2 der Halterungseinheit stehen dabei insbesondere im Wesentlichen senkrecht aufeinander.

Die Halterungseinheit weist mindestens eine Platteneinheit und eine Abwinkeleinheit auf, wobei die Platteneinheit und die Abwinkeleinheit derartig ausgestaltet und aufeinander abgestimmt sind, dass die Platteneinheit und die Abwinkeleinheit einen Winkel (a) miteinander bilden, und dass die Halterungseinheit über die Abwinkeleinheit mit dem Gehäuse verbunden ist. Diese Anordnung erlaubt die Erzeugung eines Drehmoments, welches durch die passende Wahl der Geometrie eine Kraftkomponente in die gewünschte Richtung aufweist.

Der Winkel (a) liegt im Wesentlichen zwischen 40° und 60°. Diese Winkel haben sich als besonders vorteilhaft erwiesen. In einer Ausgestaltung handelt es sich insbesondere um einen Winkel, der ungefähr 45° beträgt.

Eine Ausgestaltung beinhaltet, dass die Antriebs-/Empfangseinheit in Richtung der Normalen (N2) der Platteneinheit angeordnet ist. In einer Ausgestaltung steht die Symmetrieachse der Antriebs-/Empfangseinheit senkrecht auf der Platteneinheit und somit in Richtung der Normalen (N2), mit anderen Worten: die Antriebs-/Empfangseinheit steht senkrecht auf der Platteneinheit, welche dabei insbesondere eine Art von Scheibe ist. Durch die erfindungsgemäße Ausgestaltung der Messvorrichitung erzeugt daher das Drehmoment eine Kraft in Richtung der Normalen N2 und somit in Richtung der Symmetrieachse der Antriebs-/Empfangseinheit, bei der es sich beispielsweise um einen Piezostapel handelt.

Eine Ausgestaltung beinhaltet, dass die Abwinkeleinheit derartig ausgestaltet ist, dass eine Ebene, in welcher sich die Platteneinheit befindet, und eine Ebene, in welcher sich ein Verbindungsbereich zwischen der Abwinkeleinheit und dem Gehäuse befindet, einen Abstand (a) aufweisen. Um ein möglichst großes Drehmoment und damit verbunden eine möglichst große Kraft zu erhalten, sollte der Abstand a möglichst groß sein, d.h. es sollte sich ein möglichst großer Kraftarm zur Umwandlung der Radialkraft Frad in ein Drehmoment Md mit einer Komponente in Richtung der Antriebs-/Empfangseinheit ausbilden.

Eine Ausgestaltung sieht vor, dass der Abstand (a) derartig ist, dass die Platteneinheit von der Membran aus hinter dem Verbindungsbereich liegt. Da die Antriebs-/Empfangseinheit vorzugsweise die gleiche Geometrie, d.h. insbesondere die gleiche Höhe wie im Stand der Technik aufweist, liegt der Verbindungsbereich um den Abstand a höher in Richtung der Membran als im Stand der Technik.

Eine Ausgestaltung beinhaltet, dass die Halterungseinheit und das Gehäuse im Wesentlichen den gleichen Längenausdehnungskoeffizienten aufweisen.

Eine Ausgestaltung sieht vor, dass die Halterungseinheit, das Gehäuse und die Membran im Wesentlichen rotationssymmetrisch ausgestaltet sind. Der in Bezug auf die Erfindung relevante Teil des Gehäuses ist somit insbesondere ein Rohr.

Eine Ausgestaltung beinhaltet, dass die Halterungseinheit mit einem Rohr als Teil des Gehäuses verbunden ist.

Eine Ausgestaltung sicht vor, dass die mechanisch schwingfähige Einheit mindestens einen Schwingstab aufweist. In einer weiteren Ausgestaltung sind zwei Schwingstäbe vorgesehen, so dass es sich beispielsweise um eine sog. Schwinggabel handelt.

Die Erfindung wird anhand der nachfolgenden Zeichnungen näher erläutert. Es zeigt:

Fig. 1: einen Schnitt durch ein Messgerät gemäß dem Stand der Technik, und

Fig. 2: einen Schnitt durch ein erfindungsgemäßes Messgerät.

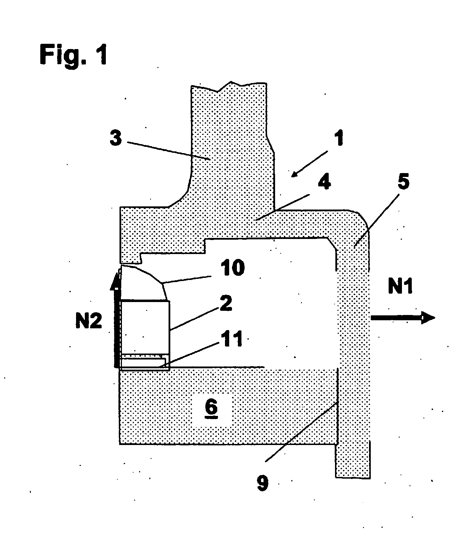

In der Fig. 1 ist ein Schnitt durch eine schematische Darstellung eines Messgerätes gemäß dem Stand der Technik dargestellt. Die mechanisch schwingfähige Einheit 1 besteht aus zwei Schwingstäben 3, welche symmetrisch zueinander ausgestaltet und auf der Membran 4 befestigt sind. Somit ist hier eine Hälfte einer sog. Schwinggabel dargestellt. Die Auswertung der mechanischen Schwingungen der schwingfähige Einheit 1 erlaubt die Bestimmung und/oder Überwachung unterschiedlicher. Prozessgrößen. Handelt es sich dabei beispielsweise um den Füllstand eines Mediums in einem Behälter, so ist eine Verminderung der Schwingungsfrequenz im Falle von Flüssigkeiten eder der Schwingungsamplitude im Falle von Schüttgütern ein Zeichen dafür, dass ein Füllstand erreicht und die schwingfähige Einheit 1 vom Medium bedeckt worden ist.

Die Membran 4 ist mit einem Gehäuse 5 verbunden, in welchem sich auch die - hier nicht dargestellten - Elektronikkomponenten befinden. Insbesondere ist hier die Membran 4 mit einem Rohr als Teil des Gehäuses, welches die Mechanik des Messgerätes umfasst, verbunden. Bei der Antriebs-/Empfangseinheit 2 handelt es sich hier um einen Stapel von piezo-elektrischen Elementen, welche zwischen einer Halbkugel 10 und einer Scheibe 11 angeordnet sind. Die Antriebs-/Empfangseinheit 2 ist unter Aufbringung einer Vorspannung zwischen der Membran 4 und der Halterungseinheit 6 eingespannt. Die Halterungseinheit 6 ist hier eine Metallplatte, welche an dem umlaufenden Verbindungsbereich 9 mit dem Gehäuse 5 bzw. mit dem oben angesprochenen Rohr verbunden ist. Die Halterungseinheit 6 ist hier ebenso wie das Gehäuse 5, die Membran 4 und die Halterungseinheit 6 rotationssymmetrisch ausgestaltet ist. Der Auflagebereich der Antriebs-/Empfangseinheit 2 befindet sich auf der gleichen Höhe wie der Verbindungsbereich 9.

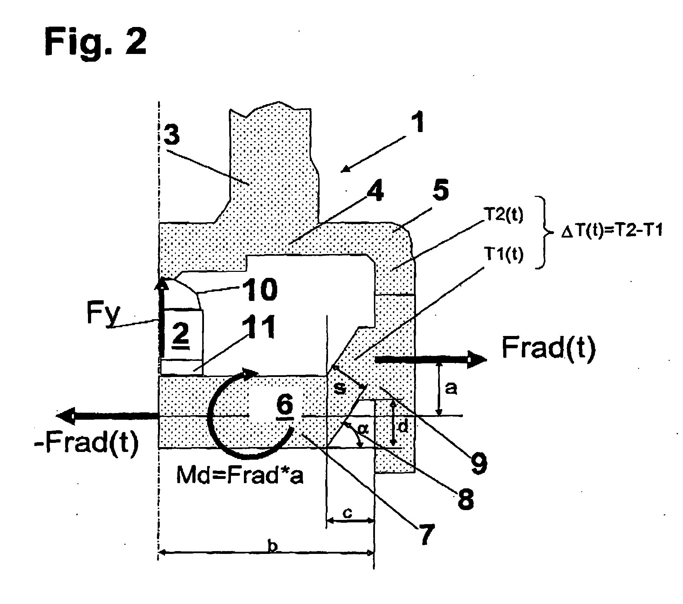

In der Anwendung trifft eine Temperaturänderung zurächst die schwingfähige Einheit 1 mit der Membran 4 und erst verzögert das restliche Gehäuse 5 bzw. die Antriebs-/Empfangseinheit 2. Aufgrund der unterschiedlichen Ausdehnungskoeffizienten von Membran 4 und Antriebs-/Empfangseinheit 2 kommt es zu einer Reduktion bzw. je nach der Höhe der Temperaturänderung zu einem Verlust der Vorspannung, d.h. die Antriebs-/Empfangseinheit 2 verliert im Extremfall während des Einschwingvorgangs den Kontakt mit der Membran 4. Dieses Problem löst die erfindungsgemäße Ausgestaltung in Fig. 2.

Die Fig. 2 zeigt ein erfindungsgemäßes Messgerät. Es gelten die gleichen Bezeichnungen wie in Abbildung Fig. 1. Im Gegensatz zum Stand der Technik in Fig. 1 besteht die Halterungseinheit 6 hier aus einer Platteneinheit 7 und einer Abwinkeleinheit 8. Die beiden Einheiten 7 und 8 bilden einen Winkel a zueinander, welcher hier ungefähr 45° beträgt. Eine Erhöhung bis auf 60° verstärkt die Effekte, solange die Wanddicke s beibehalten wird. Die Platteneinheit 7 der Halterungseinheit 6 ist über die Abwinkeleinheit 8 mit dem Rohr des Gehäuses 5 an dem auch hier rotationssymmetrischen Verbindungsbereich 9 verbunden. Durch den Winkel a rutscht im Vergleich zum Stand der Technik in der Fig. 1 die Befestigung 9 weiter in Richtung der Membran 4. Der Piezostapel der Antriebs-/Empfangseinheit 2 hat dabei die gleiche Höhe wie im Stand der Technik in Fig. 1. Somit haben also auch die beiden Ebenen den Abstand a. Befindet sich also in der Fig. 1 der Auflagebereich der Antriebs-/Empfangseinheit 2 auf der Höhe des Verbindungsbereichs 9, so liegt hier der Auflagebereich um den Abstand a hinter dem Verbindungsbereich 9.

Das zeitliche Verhalten des Sensors bei einem theoretischen Temperaturschock von 20°C auf 300°C ist derart, dass die Rohrwandung des Sensors bereits nach zwei Sekunden der vollen Temperatur ausgesetzt ist, während die Halterungseinheit 6 nach zwei Sekunden nur eine Temperatur von ca. 50°C hat. Der damit verbundene Temperaturgradient von ca. 250°C verursacht eine Temperaturspannung im Sensorrohr des Gehäuses 5, welches jedoch von der Halterungseinheit 6 im Verbindungsbereich 9 daran gehindert wird, der radialen Verschiebung des umgebenden Materials des Gehäuses 5 zu folgen. Daher ergibt sich eine sehr hohe Radialkraft Frad zwischen der Halterungseinheit 6 und dem Rohr des Gehäuses 5. Diese Kraft wirkt dabei im Wesentlichen in Richtung der Normalen N 1 des Gehäuses 5.

Mit der erfindungsgemäßen Konstruktion wird sich aufgrund der versetzten Lage der Platteneinheit 7 gegenüber dem Verbindungsbereich 9 und aufgrund der Symmetrieachse ein rechtsdrehendes Drehmoment Md = Frad * a einstellen, welches eine Kraftkomponente in Richtung der Normalen N2 der Halterungseinheit 6 und somit in Richtung der Membran 4 aufweist. Dies hat in Abhängigkeit von der Zeit eine Hubbewegung der Antriebs-/Empfangseinheit 2 zur Folge, welche dafür sorgt, dass die Antriebs-/Empfangseinheit 2 immer in Kontakt mit der Sensormembrane 4 steht. Somit ist gewährleistet, dass auch während des Temperaturschocks die Funktionalität des Sensors aufrechterhalten bleibt. Das Drehmoment Md wird umso größer, desto größer a ist. Wie der Zeichnung Fig. 2 zu entnehmen, nimmt mit größer werdendem Winkel a der Abstand d zu, was dazu führt, dass auch das Drehmoment Md entsprechend groß wird. Der Vergrößerung des Winkels a ist jedoch insoweit eine Grenze gesetzt, als dass die Steifigkeit der Halterungseinheit 6 und insbesondere der Abwinkeleinheit 8 zum Übertragen der Kraft groß genug bleiben muss.

Die Halterungseinheit 6 bzw. die Platteneinheit 7 ist dabei in sich genügend steif. Insbesondere ist sie deutlich steifer als die Biegesteifigkeit der Membran 4, da sonst ein Teil der Bewegung des Piezostapels als Antriebs-/Empfangseinheit 2 auf den Halter 6 übertragen wird, d.h. die Schwingbewegungen der Stäbe 3 werden sonst kleiner. Das Gleiche gilt für die Abwinkeleinheit 8. Auch sie sollte genügend steif sein, da sonst bei der Einwirkung des Drehmoments während dem Temperatursprung die Abwinkeleinheit 8 zurückfedert und somit weniger Andruckkraft Fy erzeugt wird.

Der Effekt der erfindungsgemäßen Konstruktion sei anhand der Skizze nach einmal kurz zusammengefasst:

1. Es tritt ein Temperaturgradient zwischen Halterungseinheit 6 und Gehäuserohr 5 auf.

2. Infolgedessen versucht das Rohr 5 den Halterungseinheit 6 in Richtung N1 zu ziehen, d.h. es tritt die Radialkraft Frad(t) auf.

3. Durch die versetzte Anordnung der Halterungseinheit 6 - erfindungsgemäß bestehend aus der Platteneinheit 7 und der Abwinkeleinheit 8 - am Rohr 5, d.h. durch den Abstand a wirkt eine entsprechende Reaktionskraft mit -Frad(t).

4. Dies führt zu einem im Uhrzeigersinn wirkenden Drehmoment Md = Frad * a.

5. Durch das wirkende Drehmoment ergibt sich eine Axialkraft in N2-Richtung. Da Md = Fy * b ist, folgt Fy = a/b grad.

6. Somit ist die Kraft, die durch das Drehmoment auf den Piezostapel 2 wirkt, abhängig von den beiden Abständen a und b.

Numerische Berechnungen haben dabei ergeben, dass der Winkel a optimalerweise zwischen 40° und 60° liegt.

**Bezugszeichenliste**

**Tabelle 1**

| | |
|---|---|
| 1 | Mechanisch schwingfähige Einheit |
| 2 | Antriebs-/Empfangseinheit |
| 3 | Schwingstab |
| 4 | Membran |
| 5 | Gehäuse |
| 6 | Halterungseinheit |
| 7 | Platteneinheit |
| 8 | Abwinkeleinheit |
| 9 | Verbindungsbereich |
| 10 | Halbkugel |
| 11 | Scheibe |

## Patentansprüche

1. Vorrichtung zur Bestimmung und/oder Überwachung mindestens einer Prozessgröße eines Mediums in einem Behälter,
mit mindestens einer mechanisch schwingfähigen Einheit (1),
mit mindestens einer Antriebs-/Empfangseinheit (2), welche die mechanisch schwingfähige Einheit (1) zu mechanischen Schwingungen anregt, und welche die mechanischen Schwingungen der mechanisch schwingfähigen Einheit (1) empfängt,
wobei die mechanisch schwingfähige Einheit (1) mindestens eine Membran (4) aufweist,
wobei die Membran (4) mit einem Gehäuse (5) verbunden ist,
wobei die Antriebs-/Empfangseinheit (2) zwischen der Membran (4) und einer Halterungseinheit (6) angeordnet ist,
wobei die Halterungseinheit (6) an dem Gehäuse (5) befestigt ist,
wobei die Halterungseinheit (6) derartig ausgestaltet und derartig an dem Gehäuse (5) befestigt ist, dass eine Radialkraft (Frad), welche im Wesentlichen in Richtung der Normalen (N1) des Gehäuses (5) wirkt, eine Kraftkomponente und/oder ein Drehmoment (Md) erzeugt, welche im Wesentlichen in Richtung einer Normalen (N2) der Halterungseinheit (6) wirkt,
wobei die Halterungseinheit (6) mindestens eine Platteneinheit (7) und eine Abwinkeleinheit (8) aufweiset,
und
wobei die Halterungseinheit (6) über die Abwinkeleinheit (8) mit dem Gehäuse (5) verbunden ist,
**dadurch gekennzeichnet,**
**dass** die Platteneinheit (7) und die Abwinkeleinheit (8) derartig ausgestaltet und aufeinander abgestimmt sind, dass die Platteneinheit (7) und die Abwinkeleinheit (8) einen Winkel (α) miteinander bilden, welcher Winkel (α) im Wesentlichen zwischen 40° und 60° liegt.

2. Vorrichtung nach Anspruch 1,
**dadurch gekennzeichnet,**
**dass** die Antriebs-/Empfangseinheit (2) in Richtung der Normalen (N2) der Platteneinheit (7) angeordnet ist.

3. Vorrichtung nach Anspruch 1,
**dadurch gekennzeichnet,**
**dass** die Abwinkeleinheit (8) derartig ausgestaltet ist, dass eine Ebene, in welcher sich die Platteneinheit (7) befindet, und eine Ebene, in welcher sich ein Verbindungsbereich (9) zwischen der Abwinkeleinheit (8) und dem Gehäuse (5) befindet, einen Abstand (a) aufweisen.

4. Vorrichtung nach Anspruch 3,
**dadurch gekennzeichnet,**
**dass** der Abstand (a) derartig ist, dass die Platteneinheit (7) von der Membran (4) aus hinter dem Verbindungsbereich (9) liegt.

5. Vorrichtung nach Anspruch 1,
**dadurch gekennzeichnet,**
**dass** die Halterungseinheit (6) und das Gehäuse (5) im Wesentlichen den gleichen Längenausdehnungskoeffizienten aufweisen.

6. Vorrichtung nach Anspruch 1 oder 5,
**dadurch gekennzeichnet,**
**dass** die Halterungseinheit (6), das Gehäuse (5) und die Membran (4) im Wesentlichen rotationssymmetrisch ausgestaltet sind.

7. Vorrichtung nach Anspruch 1 oder 6,
**dadurch gekennzeichnet,**
**dass** die Halterungseinheit (6) mit einem Rohr als Teil des Gehäuses (5) verbunden ist.

8. Vorrichtung nach Anspruch 1,
**dadurch gekennzeichnet,**
**dass** die mechanisch schwingfähige Einheit (1) mindestens einen Schwingstab (3) aufweist.

## Claims

1. Unit for determining and/or monitoring at least one process variable of a medium in a container,
with at least one unit (1) capable of mechanical oscillation,
with at least one drive/receiver unit (2) which causes the unit (1) capable of mechanical oscillation to oscillate mechanically, and which receives the mechanical oscillations of the unit (1) capable of mechanical oscillation,
where the unit (1) capable of mechanical oscillation has at least one membrane (4),
where the membrane (4) is connected to a housing (5),
where the drive/receiver unit (2) is arranged between the membrane (4) and a holder unit (6), where the holder unit (6) is secured to the housing (5),
where the holder unit (6) is designed and secured to the housing (5) in such a way that a radial force (Frad), which primarily acts in the direction of the normal (N1) of the housing (5), generates a force component and/or a torque (Md), which primarily acts in the direction of a normal (N2) of the holder unit (6),
where the holder unit (6) has at least one plate unit (7) and one angular unit (8), and where the holder unit (6) is connected to the housing (5) via the angular unit (8).
**characterized in that**
the plate unit (7) and the angular unit (8) are designed and harmonized in such a way that the plate unit (7) and the angular unit (8) create an angle (α) vis-à-vis one another, where said angle (α) is primarily between 40° and 60°,

2. Unit as per Claim 1,
**characterized in that**
the drive/receiver unit (2) is arranged in the direction of the normal (N2) of the plate unit (7).

3. Unit as per Claim 1,
**characterized in that**
the angular unit (8) is designed in such a way that there is a distance (a) between a level where the plate unit (7) is located, and a level where a connection area (9) between the angular unit (8) and the housing (5) is located.

4. Unit as per Claim 3,
**characterized in that**
the distance (a) is such that the plate unit (7) is located behind the connection area (9) as viewed from the membrane (4).

5. Unit as per Claim 1,
**characterized in that**
the holder unit (6) and the housing (5) both primarily have the same longitudinal expansion coefficient.

6. Unit as per Claim 1 or 5,
**characterized in that**
the holder unit (6), the housing (5) and the membrane (4) primarily have a rotationally symmetrical design.

7. Unit as per Claim 1 or 6,
**characterized in that**
the holder unit (6) is connected to a pipe as part of the housing (5).

8. Unit as per Claim 1,
**characterized in that**
the unit (1) capable of mechanical oscillation has at least one vibration rod (3).

## Revendications

1. Dispositif destiné à la détermination et/ou la surveillance d'au moins une grandeur process d'un produit dans un réservoir,
avec au moins une unité mécanique apte à vibrer (1),
avec au moins une unité d'entraînement / de réception (2), laquelle excite en vibrations mécaniques l'unité mécanique apte à vibrer (1), et laquelle reçoit les vibrations mécaniques provenant de l'unité mécanique apte à vibrer (1),
l'unité mécanique apte à vibrer (1) présentant au moins une membrane (4),
la membrane (4) étant reliée avec un boîtier (5),
l'unité d'entraînement / de réception (2) étant disposée entre la membrane (4) et une unité support (6),
l'unité support (6) étant fixée au boîtier (5),
l'unité support (6) étant conçue de telle manière, et fixée au boîtier (5) de telle manière qu'une force radiale (Frad), laquelle agit pour l'essentiel en direction de la normale (N1) du boîtier (5), génère une composante de force et/ou un couple (Md), lesquels agissent pour l'essentiel en direction d'une normale (N2) de l'unité support (6),
l'unité support (6) présentant au moins une unité de plaques (7) et une unité angulaire (8),
et
l'unité support (6) étant reliée avec le boîtier (5) par l'intermédiaire de l'unité angulaire (8). **caractérisé en ce**
**que** l'unité de plaques (7) et l'unité angulaire (8) sont conçues et assorties l'une à l'autre de telle manière que l'unité de plaques (7) et l'unité angulaire (8) forment l'une par rapport à l'autre un angle (α), lequel angle (α) se situe pour l'essentiel entre 40° et 60°.

2. Dispositif selon la revendication 1,
**caractérisé en ce**
**que** l'unité d'entraînement / de réception (2) est disposée en direction de la normale (N2) de l'unité de plaques (7).

3. Dispositif selon la revendication 1,
**caractérisé en ce**
**que** l'unité angulaire (8) est conçue de telle manière qu'un plan, dans lequel se trouve l'unité de plaques (7), et un plan, dans lequel se trouve une zone de liaison (9) entre l'unité angulaire (8) et le boîtier (5), présentent une distance (a).

4. Dispositif selon la revendication 3,
**caractérisé en ce**
**que** la distance (a) est telle que l'unité de plaques (7) se situe, en partant de la membrane (4), derrière la zone de liaison (9).

5. Dispositif selon la revendication 1,
**caractérisé en ce**
**que** l'unité support (6) et le boîtier (5) présentent pour l'essentiel le même coefficient de dilatation thermique linéaire.

6. Dispositif selon la revendication 1 ou 5,
**caractérisé en ce**
**que** l'unité support (6), le boîtier (5) et la membrane (4) sont pour l'essentiel conçus avec une symétrie de révolution.

7. Dispositif selon la revendication 1 ou 6,
**caractérisé en ce**
**que** l'unité support (6) est reliée avec un tube faisant partie intégrante du boîtier (5).

8. Dispositif selon la revendication 1,
**caractérisé en ce**
**que** l'unité mécanique apte à vibrer (1) présente au moins une tige vibrante (3).
